# EUROPEAN PATENT SPECIFICATION

(11) **EP 3 364 589 B1**
(45) Date of publication and mention of the grant of the patent: **25.01.2023**
(21) Application number: 18152883.7
(22) Date of filing: 23.01.2018
(51) Int. Cl.: H04L 5/00

(54) **FLEXIBLE NB-IOT MULTI-CARRIER OPERATION ACROSS RADIO FREQUENCY BANDS**
FLEXIBLER NB-IOT-MEHRTRÄGERBETRIEB ÜBER FUNKFREQUENZBÄNDER
FONCTIONNEMENT DE MULTI-PORTEUSES NB-IOT FLEXIBLES SUR DES BANDES DE RADIOFRÉQUENCES

(30) Priority: 30.01.2017 EP 17153663
(43) Date of publication of application: 22.08.2018
(73) Proprietor: Shenzhen Goodix Technology Co., Ltd., Shenzhen, Guangdong 518045 (CN)
(72) Inventor: Kurth, Mathias, 01277 Dresden (DE)
(74) Representative: Lippert Stachow Patentanwälte Rechtsanwälte Partnerschaft mbB

(56) References cited:
- US-A1- 2011 292 812
- US-A1- 2013 301 565
- US-A1- 2014 023 016
- US-A1- 2014 254 521
- US-A1- 2015 124 748
- US-A1- 2016 112 965
- US-A1- 2016 242 064
- HUAWEI ET AL: "NPRACH on Non-anchor NB-IoT Carrier", 3GPP DRAFT; R2-165533 NPRACH ON NON-ANCHOR NB-IOT CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126993, Retrieved from the Internet: URL:http://www.3gpp.org/ftp/Meetings_3GPP_ SYNC/RAN2/Docs/ [retrieved on 2016-08-21]
- NOKIA NETWORKS ET AL: "NB-IoT Operation in Multiple PRBs", 3GPP DRAFT; R1-160447, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 5 February 2016 (2016-02-05), XP051063773, Retrieved from the Internet: URL:http://www.3gpp.org/ftp/tsg_ran/WG1_RL 1/TSGR1_84/Docs/ [retrieved on 2016-02-05]
- HUAWEI: "Corrections to NB-IoT General", 3GPP DRAFT; R2-164941 CORRECTIONS TO NB-IOT GENERAL IN 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126607, Retrieved from the Internet: URL:http://www.3gpp.org/ftp/Meetings_3GPP_ SYNC/RAN2/Docs/ [retrieved on 2016-08-21]
- ERICSSON: "UE Reconfiguration to a Non-Anchor Carrier in NB-IoT", 3GPP DRAFT; R2-162769 - UE RECONFIGURATION TO A NON-ANCHOR CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Dubrovnik, Croatia; 20160411 - 20160415 2 April 2016 (2016-04-02), XP051082541, Retrieved from the Internet: URL:http://www.3gpp.org/ftp/tsg_ran/WG2_RL 2/TSGR2_93bis/Docs/ [retrieved on 2016-04-02]

## Description

The invention relates to a method for improving NarrowBand Internet-of-Things radio network utilization by establishing an improved connection procedure between an eNodeB and an UE.

NarrowBand Internet-of-Things (NB-IoT) is a recently ratified 3GPP standard for the radio interface between base station (eNodeB) and user equipment (UE). It can be deployed in a standalone fashion in refarmed GSM spectrum. Furthermore, it can share spectrum resources with a FD-LTE (Frequency Division Long Term Evolution) cell, either within the LTE band as well as within the LTE guard band. The objectives of the standard are the power efficient transport of infrequent small data with battery lifetimes of up to 10 years, extension of the cellular coverage, the support of a large number of devices within a cell as well as low complex devices with low costs [Reference: 3GPP TS 23.720 Study on architecture enhancements for Cellular Internet of Things].

As the characteristic traffic pattern, an IoT device generally generates small amounts of data in an infrequent fashion, either periodically or triggered by external events. At that time, the device becomes active (enters connected mode) and reports the data to the network. Thereafter, it enters idle mode where it is monitoring the signal conditions in-between the sleep cycle. In order to achieve a battery lifetime of many years, the sleep cycles within NB-IoT are extended to hours and days. The mobility in idle mode is controlled by the UE according to priorities given by the network. Since the priorities affect all UEs in the same way, it is generally not possible to evenly distribute the UEs across the available NB-IoT frequency layers. Since the frequency layer the NB-IoT is camped on in idle mode will be used to initiate the connection establishment to enter connected mode, it can be expected that one frequency layer will get congested whereas the remaining layers will be underutilized. A frequency layer is the same as a "RF channel" or "RF carrier". Multiple frequency layers might be within a radio frequency band in the sense of this invention.

The NB-IoT standard does not define connected mode mobility in order to keep the complexity of the device low. Once the connection to the eNodeB has been established, the UE cannot be handed over to another cell without interrupting the connection. For allocating the UE to another carrier frequency of another radio frequency band, the NB-IoT standard defines two procedures: the multi-carrier operation and redirection [Reference: 3GPP TS 36.300 E-UTRA and E-UTRAN - Overall Description, Release 13]. When multi-carrier operation is configured in connected mode via dedicated signaling from the eNodeB, all unicast communication towards UE is taking place on the configured carrier. Furthermore, the eNodeB can redirect the UE to another carrier frequency within a connection release.

Due to the missing connected mode mobility in NB-IoT, an efficient use of multiple frequency layers is not possible. Using redirection, the eNodeB can redirect the UE to any other carrier frequency. The redirection procedure requires, however, an additional connection establishment after the connection release, which is not efficient in terms of UE power consumption. When using the multi-carrier operation, on the other hand, then some parts of the frequency spectrum allocated to NB-IoT will become congested whereas others remain underutilized. The reason is that the UE selects the frequency layer in idle mode, and the associated frequency band cannot be changed by the eNodeB using the multi-carrier operation. The following issues are preventing the NB-IoT multi-carrier operation across frequency bands:
Issue 1: The NB-IoT base station is unaware about the signal conditions at the UE. Since no measurement reporting is defined, the network is not aware about the signal conditions at the UE on different frequency layers.
Issue 2: Multi-carrier operation across different radio frequency bands is not supported. The cell-specific parameters determining the maximum allowed UE transmission power (p-Max and additionalSpectrumEmission) cannot be configured for a non-anchor carrier. When both anchor and non-anchor carriers are within different bands A and B, procedures are required to derive the initial narrowband physical uplink shared channel (NPUSCH) power on band B using the pathloss from the random access in band A.
Issue 3: A change of the radio frequency of the anchor carrier is not supported. The anchor carrier is selected by the UE during connection establishment. It cannot be changed by the network during an established connection. For 3GPP Release 13 UEs, the random-access procedure will take place on the anchor carrier, so that the multi-carrier operation cannot mitigate the congestion during random access see e. g. HUAWEI: "Corrections to NB-IoT General". 3GPP DRAFT; R2-164941. The NB-IoT Release 14 will define procedures to configure UEs with random access on non-anchor carriers, for example in HUAWEI ET AL: "NPRACH on Non-anchor NB-IoT Carrier", 3GPP DRAFT; R2-165533 3GPP or NOKIA NETWORKS ET AL: "NB-IoT operation in multiple PRBs", 3GPP DRAFT; R1-160447.
Issue 4: Radio link monitoring (RLM) across different radio frequency bands is not supported. The RLM procedure, e. g. see US 2011/0292812 A1 or US 2016/0242064 A1, only monitors the narrowband reference symbols (NRS) on two channels [Reference: [R1-1613450] WF on NB-IoT Rel-13 UE NRSRP, NRSRQ and RLM measurements, RAN1#87 discussion]:
   - On the narrowband physical downlink control channel (NPDCCH) within the UE specific search space (USS), and
   - on the narrowband physical downlink shared channel (NPDSCH) within transmissions directed towards the UE,
   but does not address the issue of enabling multi-carrier operation across frequency bands.

When operating multiple carriers in different radio frequency bands, however, the signal conditions might vary widely. A radio link failure, as e. g. considered in US 2016/0242064 A1, triggered by RLM on the non-anchor carrier will initiate the connection reestablishment procedure using the default dedicated configuration regardless of the condition of the anchor carrier. A RF band support is not considered.

The RLM procedure is not used during the random-access procedure on the anchor carrier, so the radio link failure (RLF) can be declared only after detection of random access problems.

Issue 5: Multi-carrier operation across different NB-IoT physical cells is not supported. The multi-carrier operation in NB-IoT assumes that all carriers share the same narrowband physical layer cell identity (PCI), which renders the cell planning more difficult for the operator.

Issue 6: Multi-carrier operation across different LTE physical cells is not supported. For uplink transmissions on the narrowband physical uplink shared channel (NPUSCH), the UE has to remain silent when there are sounding reference signals (SRS) configured in the LTE mother cell as configured within srs-SubframeConfig [Reference: 3GPP TS 36.331 E-UTRA - Radio Resource Control (RRC) , Release 13]. The SRS configuration of additional LTE cell having the non-anchor carrier cannot be signaled. The E-UTRA control region size of the additional LTE cell cannot be signaled, since the value eutraControlRegionSize in CarrierConfigDedicated has to be set to the anchor configuration for inband operation. When the NB-IoT anchor carrier is situated within an LTE cell, the NB-IoT UE might benefit from detection of the LTE common reference signals (CRS). Due to the missing power offset between CRS and NRS for the additional LTE cell, this is not possible on the non-anchor carrier within another LTE mother cell.

Issue 7: Multi-carrier operation on an anchor carrier is not supported. The anchor carrier in NB-IoT additionally contains synchronization signals as well as system information, which changes the scheduling of NPDCCH and NPDSCH. The presence of synchronization signals as well as the scheduling information of system information cannot be configured when adding a non-anchor carrier.

Issue 8: Multi-carrier operation across timing unsynchronized cells is not supported. A NB-IoT non-anchor carrier does not provide synchronization signals.

Relevant prior art can also be found in US 2015/124748 A1 and in US 2014/023016 A1.

It is therefore the objective of the invention to address the above mentioned problems and to provide a method which allows efficient NB-IoT multi-carrier operation across different radio frequency bands or NB-IoT/ LTE mother cells. The objective will be solved by a method according to independent claim 1.

The proposed scheme generates benefits for both base station (eNodeB) and UE side. Since the base station is now able to distribute UEs across different NB-IoT carriers and cells, the utilization of the available spectrum resources can be improved. A higher number of connected UEs can be supported when applying a load balancing at the base station. At the same time, the proposal retains the full flexibility within the cell and frequency planning since all parts of the full physical configuration for the added carrier can be provided to the UE.

On the UE side, the load balancing generally reduces the network congestion, i.e. the network access delay as well as the scheduling latency will be improved. Thus, the UE can achieve higher throughputs, but more importantly, the energy consumption is reduced and the battery lifetime is prolonged. Compared to connected mode mobility via measurement reporting and handover control from network side, the complexity of the proposed scheme is substantially lower.

A UE, which tries to connect to a first radio frequency band, provides measurement results obtained in idle mode to the eNodeB, whereas the measurement results comprise information about quality of cells that have been found on other radio frequency bands that are supported by the eNodeB. This has the advantage that a higher number of connected UEs can be supported when applying a load balancing at the base station. And at the same time, on the UE side, the load balancing generally reduces the network congestion, i.e. the network access delay as well as the scheduling latency will be improved.

In a preferred embodiment of the inventive method, the eNodeB uses the measurement results contained in the RRCConnectionRequest message sent from the UE to the eNodeB to allocate and configure the UE to another radio frequency band to optimize signal conditions on both the eNodeB and UE side, whereas the UE sends a connection setup completed message from the allocated other radio frequency band to the eNodeB.

During connection establishment, connection resume and connection reestablishment, the UE is providing (a limited set of) measurement results obtained in idle mode to the network. The UE can obtain the frequency layers of interest from the SystemInformationBlockType3-NB, SystemInformationBlockType4-NB and SystemInformationBlockType5-NB. Within the list of measurement reports, unsuitable results might be filtered, e.g. by applying the cell selection criterion [Reference: 3GPP TS 36.304 E-UTRA - User Equipment (UE) procedures in idle mode, Release 13] first.

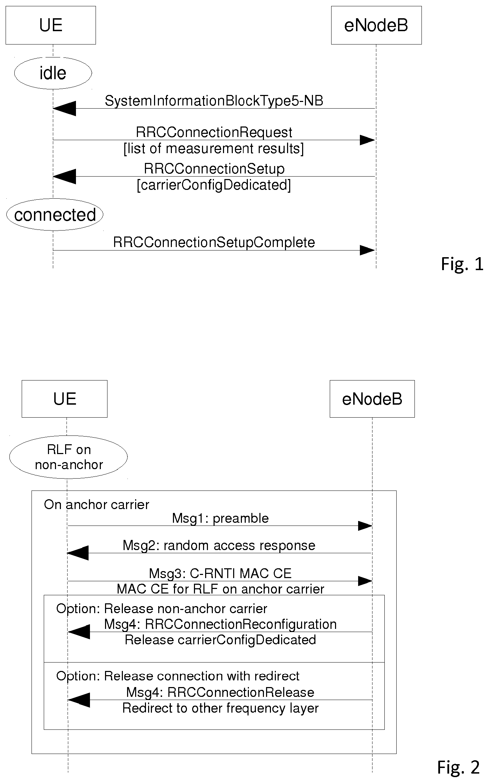

In figure 1, the use case of connection establishment is illustrated. Using the proposed solution, the UE additionally reports the quality of cells to the network that have been found on other frequency layers. The RRCConnectionRequest message is used for that purpose. Using the information about the signal conditions at the UE, the base station is able to configure the UE with an additional NB-IoT carrier using the RRCConnectionSetup message. Within a typical IoT application, the traffic pattern generally consists of the exchange of a small number of messages. Thus, reporting the measurement results once during the start of a connection is sufficient for most IoT applications.

In a further preferred embodiment of the inventive method, the system information messages broadcasted by the eNodeB to the UE is extended by a parameter to tell the UE an expected transmission power of the other radio frequency bands by the eNodeB, whereas the UE calculates a pathloss and adapts the transmission power accordingly.

The configuration of the maximum transmission power as well as the configuration of NPUSCH reference signals and uplink power control of the added NB-IoT carrier is provided to the UE using dedicated signaling. The configuration is optional, and the configuration of the anchor carrier shall be used when no configuration is provided by the network.

When using a different radio frequency band for NPUSCH, the pathloss might differ vastly. In order to account for the differences, the pathloss PL_{c} used in the calculation of P_{NPUSCH,c(i)} in [Reference: 3GPP TS 36.321 E-UTRA - (MAC) protocol specification, Release 13, chap. 16.2.1.1.1] shall consider the NRS power and NRSRP from the carrier where the NPUSCH transmission will take place.

For the connection establishment use case shown in figure 1, the newly configured NB-IoT carrier C is used first for the transmission of the RRCConnectionSetupComplete in message 5. For the carrier C, NRSRP measurements are available from idle mode. All further configurations required for the NPUSCH power calculation is provided to the UE within the RRCConnectionSetup message, if different from the anchor configuration. This includes the cell specific maximum transmission power p-Max, the NRS power as well as UplinkPowerControlCommon-NB. So, all carriers should apply the same common (cell-specific) configuration of NPUSCH reference signals (in npusch-ConfigCommon) as well as uplink power control (in uplinkPowerControlCommon).

If the UE is connected to a first anchor carrier of the first radio frequency band and the UE is allocated to the other radio frequency band the eNodeB reconfigures the dedicated anchor carrier to the allocated other radio frequency band.

The configuration of the radio frequency of the new anchor carrier is provided to the UE using dedicated signaling. In addition, the common configuration of the new anchor carrier is provided to the UE, either as a differential or a full reconfiguration. For the connection establishment use case in figure 1, the network could additionally reconfigure the anchor carrier of the considered UE within another radio frequency band along with the required common configuration. For the network, the reconfiguration of the anchor carrier has the benefit that the eNodeB can also control the band for the random access of the connected UEs not supporting 3GPP Release 14. For the UE, on the other hand, changing the anchor carrier to the radio frequency band of the non-anchor has the benefit of better pathloss estimation, since more NRS resources will be available.

In another embodiment of the inventive method, a radio link monitoring procedure is established within an additional signaling exchanged by the UE and the eNodeB, whereas the UE informs the eNodeB about a radio link failure on a non-anchor carrier and the eNodeB reconfigure the UE and release the non-anchor carrier or redirect the UE to another radio frequency band.

If the radio link failure (RLF) occurs on a non-anchor carrier while the anchor is still operational, an additional signaling can be introduced e.g. within random access message 3 to inform the base station about the radio failure. On reception, the network might trigger a connection reconfiguration to de-configure the non-anchor carrier, which is not functional anymore. In figure 2, the use case of radio link failure (RLF) on the non-anchor carrier is shown. Since the anchor carrier is still operational, no reestablishment is triggered. Instead, the UE informs the network about the RLF using a newly defined MAC control element (CE) together with the C-RNTI MAC CE in message 3. On reception, the network might reconfigure the UE and release the non-anchor carrier, or it might release the connection and redirect the UE to another frequency layer. When the UE is within the random-access procedure on the anchor carrier, radio link monitoring is introduced on the Type-2 Common Search Space of NPDCCH. The rationale is to speed up the detection of a radio link failure on the anchor carrier before the random-access problem is declared in order to save battery power.

The additional signaling exchanged by the UE and the eNodeB can be further extended by a configuration of a narrowband physical cell identity which is provided to the UE by the eNodeB so that multi-carrier operations across different LTE physical cells are supported. The configuration of the physical cell identity of the NB-IoT cell that is added as additional carrier is provided to the UE using dedicated signaling.

Furthermore, the additional signaling exchanged by the UE and the eNodeB is further extended by parameters such as a physical cell identity of a LTE mother cell, its SRS configuration, a E-UTRA control region size and a power offset between CRS and NRS so that a multi-carrier operation across different LTE physical cells is supported. The dedicated configuration of the added NB-IoT carrier towards the UE is extended with the optional configuration for the added NB-IoT carrier: the physical cell identity of the LTE mother cell, its SRS configuration, the E-UTRA control region size and the power offset between CRS and NRS. When the NB-IoT anchor carrier is situated within an LTE cell, and the eNodeB provides additional configuration parameters of the LTE cell, the NB-IoT UE benefits from detection of the LTE common reference signals (CRS) and the information about the power offset between CRS and NRS for the additional LTE cell, which makes multi-carrier operation also possible on the non-anchor carrier within another LTE mother cell. This has the advantage that the reference symbols of the LTE mother cell can be used for channel estimation. This way, the accuracy of the channel estimation can be improved, which increases the performance of the NB-IoT downlink receiver.

The additional signaling exchanged by the UE and the eNodeB can be further extended by a parameter to indicate to the UE that an added carrier is an anchor carrier. The configuration of the added NB-IoT carrier is extended with optional configuration indicating that the added carrier is an anchor carrier. In that case, the scheduling information of the system information is additionally provided within the dedicated configuration. This has the advantage that the base station has more flexibility when scheduling users, which increases the overall capacity and mitigates congestion.

Moreover, the additional signaling exchanged by the UE and the eNodeB can be further extended by timing information of an anchor carrier of the first radio frequency band which is used by the UE allocated to the other radio frequency band for synchronization so that a multi-carrier operation across timing unsynchronized cells is supported. In other words, the configuration of the added NB-IoT carrier is extended with optional configuration of an anchor carrier within the radio frequency band of the NB-IoT carrier to be added. The NB-IoT time (hyperframe, frame, subframe) is provided within the dedicated signaling, whereas the UE is using the synchronization signals of the provided anchor carrier to estimate the fine sample timing. Thus, the timing of uplink and downlink on the non-anchor carrier is synchronized to the anchor carrier. As a special case, the anchor carrier provided for timing synchronization can also refer to the added NB-IoT carrier itself.

The proposed solution covers a variety of use cases. The propagation delay of collocated cells might differ due to the usage of different bands. The base station might employ remote radio heads, where bands are mapped differently. Furthermore, the proposed solution also covers the use case of non-collocated NB-IoT cells with asynchronous timing.

The invention will be explained in more detail using exemplary embodiments.

### The appended drawings show

- Fig. 1: Use case measurement reporting during connection establishment;
- Fig. 2: Use case radio link failure on non-anchor carrier with recovery on anchor carrier.

In figure 1, the use case of connection establishment is illustrated. Using the proposed solution, the UE additionally reports the quality of cells to the network that have been found on other frequency layers. The RRCConnectionRequest message is used for that purpose. Using the information about the signal conditions at the UE, the base station is able to configure the UE with an additional NB-IoT carrier using the RRCConnectionSetup message. Within a typical IoT application, the traffic pattern generally consists of the exchange of a small number of messages. Thus, reporting the measurement results once during the start of a connection is sufficient for most IoT applications.

For the connection establishment use case in figure 1, the network could additionally reconfigure the anchor carrier of the considered UE within another radio frequency band along with the required common configuration. For the network, the reconfiguration of the anchor carrier has the benefit that the eNodeB can also control the band for the random access of the connected UEs not supporting 3GPP Release 14. For the UE, on the other hand, changing the anchor carrier to the radio frequency band of the non-anchor carrier has the benefit of better pathloss estimation, since more NRS resources will be available.

In figure 2, the use case of radio link failure (RLF) on the non-anchor carrier is shown. Since the anchor carrier is still operational, no reestablishment is triggered. Instead, the UE informs the network about the RLF using a newly defined MAC control element (CE) together with the C-RNTI MAC CE in message 3. On reception, the network might reconfigure the UE and release the non-anchor carrier, or it might release the connection and redirect the UE to another frequency layer.

When the UE is within the random-access procedure on the anchor carrier, radio link monitoring is introduced on the Type-2 Common Search Space of NPDCCH. The rationale is to speed up the detection of a radio link failure on the anchor carrier before the random-access problem is declared in order to save battery power.

## Claims

1. A method for improving NarrowBand Internet of Things, NB-IoT, radio network utilization by establishing a connection procedure between a base station, eNodeB, and a user equipment, UE, the UE trying to connect to a first radio frequency band, where the eNodeB sends a SystemInformationBlockType5-NB message, which comprises other radio frequency bands of interest that are supported by the eNodeB, to the UE and the UE sends a RRCConnectionRequest message, which comprises information about signal conditions of cells that have been found on the other radio frequency bands at the UE provided by measurement results obtained in idle mode, back to the eNodeB and the eNodeB configures the UE with an additional NB-IoT carrier using a RRCConntectionSetup message, so that multi-carrier operations are performable across the other radio frequency bands, that are supported by the eNodeB.

2. The method for improving NB-IoT radio network utilization according to claim 1, wherein the eNodeB uses the measurement results contained in the RRCConnectionRequest message sent from the UE to the eNodeB to allocate and configure the UE to another radio frequency band to optimize signal conditions on both the eNodeB and UE side, wherein the UE sends a connection setup completed message from the allocated other radio frequency band to the eNodeB.

3. The method for improving NB-IoT radio network utilization according to one of the claims 1 or 2, wherein system information messages broadcasted by the eNodeB to the UE are extended by a parameter to tell the UE an expected transmission power of the other radio frequency bands by the eNodeB, wherein the UE calculates a pathloss and adapts the transmission power accordingly.

4. The method for improving NB-IoT radio network utilization according to one of the claims 1 to 3, wherein a radio link monitoring procedure is established within an additional signaling exchanged by the UE and the eNodeB, wherein the UE informs the eNodeB about a radio link failure on a non-anchor carrier by using a newly defined MAC control element together with a C-RNTI MAC CE in message 3 and the eNodeB reconfigures the UE and releases the non-anchor carrier or redirects the UE to another radio frequency band.

## Patentansprüche

1. Verfahren zum Verbessern einer NarrowBand-Internet-of-Things- bzw. NB-IoT-Funknetznutzung durch Aufbauen einer Verbindungsprozedur zwischen einer Basisstation, eNodeb, und einem Benutzergerät, UE, wobei das UE einen Verbindungsversuch mit einem ersten Hochfrequenzband unternimmt, wobei die eNodeb eine SysteminformationBlockType5-NB-Nachricht, die andere Hochfrequenzbänder von Interesse umfasst, die durch die eNodeb unterstützt werden, an das UE sendet und das UE eine RRCConnectionRequest-Nachricht, die Informationen über Signalbedingungen von Zellen, die in den anderen Hochfrequenzbändern gefunden wurden, an dem UE, bereitgestellt durch im Ruhemodus erhaltenen Messergebnissen, umfasst, an die eNodeb zurücksendet und die zurück das UE unter Verwendung einer RRCConntectionSetup-Nachricht mit einem zusätzlichen NB-IoT-Träger konfiguriert, sodass Mehrträgeroperationen über die anderen Hochfrequenzbänder, die durch die eNodeB unterstützt werden, hinweg durchführbar sind.

2. Verfahren zum Verbessern einer NB-IoT-Funknetznutzung nach Anspruch 1, wobei die eNodeb die in der von dem UE an die eNodeb gesendeten RRCConnectionRequest-Nachricht enthaltenen Messergebnisse verwendet, um das UE zu einem anderen Hochfrequenzband zuzuweisen und zu konfigurieren, um Signalbedingungen auf sowohl der eNodeb- als auch der UE-Seite zu optimieren, wobei das UE eine Verbindungseinrichtungabschlussnachricht aus dem zugewiesenen anderen Hochfrequenzband an die eNodeb sendet.

3. Verfahren zum Verbessern einer NB-IoT-Funknetznutzung nach Anspruch 1 oder 2, wobei Systeminformationsnachrichten, die durch die eNodeb an das UE rundgesendet werden, um einen Parameter erweitert werden, um dem UE eine erwartete Sendeleistung des anderen Hochfrequenzbands durch die eNodeb mitzuteilen, wobei das UE einen Pfadverlust berechnet und die Sendeleistung dementsprechend anpasst.

4. Verfahren zum Verbessern einer NB-IoT-Funknetznutzung nach einem der Ansprüche 1 bis 3, wobei eine Funkverbindungsüberwachungsprozedur innerhalb einer durch das UE und die eNodeb ausgetauschten zusätzlichen Signalisierung aufgebaut wird, wobei das UE die eNodeb über einen Funkverbindungsfehlschlag auf einem Nicht-Anker-Träger durch Verwenden eines neu definierten MAC-Steuerelements zusammen mit einem C-RNTI MAC CE in Nachricht 3 informiert und die eNodeb das UE rekonfiguriert und den Nicht-Anker-Träger freigibt oder das UE zu einem anderen Hochfrequenzband umleitet.

## Revendications

1. Procédé d'amélioration de l'utilisation d'un réseau radio de l'Internet des objets à bande étroite, NB-IoT, par établissement d'une procédure de connexion entre une station de base, eNodeB, et un équipement utilisateur, UE, l'UE tentant de se connecter à une premier bande radiofréquence, l'eNodeB envoyant à l'UE un message SystemInformationBlockType5-NB, lequel comprend d'autres bandes radiofréquences d'intérêt qui sont prises en charge par l'eNodeB, et l'UE envoyant en retour à l'eNodeB un message RRCConnectionRequest, lequel comprend des informations concernant des conditions de signal de cellules qui ont été identifiées sur les autres bandes radiofréquences au niveau de l'UE fournies par des résultats de mesure obtenus en mode repos, et l'eNodeB configurant l'UE avec une porteuse NB-IoT additionnelle au moyen d'un message RRCConnectionSetup, de façon à permettre un fonctionnement en multiporteuse sur l'ensemble des autres bandes radiofréquences, qui sont prises en charge par l'eNodeB.

2. Procédé d'amélioration de l'utilisation d'un réseau radio NB-IoT selon la revendication 1, dans lequel l'eNodeB utilise les résultats de mesure contenus dans le message RRCConnectionRequest envoyé de l'UE à l'eNodeB pour allouer et configurer l'UE sur une autre bande radiofréquence afin d'optimiser des conditions de signal tant du côté eNodeB que du côté UE, l'UE envoyant un message configuration de connexion terminée de l'autre bande radiofréquence allouée à l'eNodeB.

3. Procédé d'amélioration de l'utilisation d'un réseau radio NB-IoT selon l'une des revendications 1 ou 2, dans lequel des messages d'informations système diffusés par l'eNodeB vers l'UE sont étendus par un paramètre afin de notifier à l'UE une puissance de transmission attendue des autres bandes radiofréquences par l'eNodeB, l'UE calculant un affaiblissement sur le trajet et adaptant en conséquence la puissance de transmission.

4. Procédé d'amélioration de l'utilisation d'un réseau radio NB-IoT selon l'une des revendications 1 à 3, dans lequel une procédure de surveillance de liaison radio est établie dans une signalisation additionnelle échangée par l'UE et l'eNodeB, l'UE informant l'eNodeB d'une défaillance de liaison radio sur une porteuse non d'ancrage au moyen d'un élément de commande MAC nouvellement défini conjointement avec un C-RNTI MAC CE dans un message 3 et l'eNodeB reconfigurant l'UE et libérant la porteuse non d'ancrage ou redirigeant l'UE vers une autre bande radiofréquence.
